# EUROPÄISCHE PATENTSCHRIFT

(11) **EP 3 030 793 B1**
(45) Veröffentlichungstag und Bekanntmachung des Hinweises auf die Patenterteilung: **14.06.2017**
(21) Anmeldenummer: 14709587.1
(22) Anmeldetag: 03.03.2014
(51) Int. Cl.: A47L 11/40, F16J 15/3232, F15B 15/14, F16J 15/16, F16J 15/56

(54) **ABSTREIFEREINHEIT SOWIE HYDRAULISCHE ARBEITSVORRICHTUNG MIT EINER ABSTREIFEREINHEIT**
STRIPPER UNIT AND HYDRAULIC WORKING APPARATUS HAVING A STRIPPER UNIT
UNITÉ DE RACLAGE ET DISPOSITIF DE TRAVAIL HYDRAULIQUE COMPORTANT UNE UNITÉ DE RACLAGE

(30) Priorität: 05.08.2013 DE 102013108421
(43) Veröffentlichungstag der Anmeldung: 15.06.2016
(73) Patentinhaber: Dr. Walter Hunger Beteiligungs GmbH & Co. Besitz KG, 97080 Würzburg (DE)
(72) Erfinder: HUNGER, Ingrid, 97816 Lohr (DE)
(74) Vertreter: Witte, Weller & Partner Patentanwälte mbB
(86) Internationale Anmeldenummer: PCT/EP2014/054080
(87) Internationale Veröffentlichungsnummer: WO 2015/018537

(56) Entgegenhaltungen:
- DE-U1-202009 013 548
- JP-A- 2006 226 455
- US-A- 2 973 983
- US-A- 4 566 701

## Beschreibung

Die Erfindung betrifft eine Abstreifereinheit, insbesondere einen Eisabstreifer für hydraulische Arbeitsvorrichtungen, zum Schutz einer Sekundärseite vor an einer Primärseite auftretenden Umwelteinflüssen, insbesondere zum Schutz von Führungsanordnungen und/oder Dichtungsanordnungen, mit einem Haltering, einem primären Abstreifer und mit einem sekundären Abstreifer. Die Erfindung betrifft ferner eine hydraulische Arbeitsvorrichtung, insbesondere einen Hydraulikzylinder, mit einer derartigen Abstreifereinheit.

Abstreifereinheiten (auch: Abstreifer) allgemeiner Art, etwa auch bezeichnend als Schmutzabstreifer, Eisabstreifer oder dergleichen, sind im Stand der Technik bekannt und finden Verwendung bei einer Vielzahl von Zylinder-Kolben-Anordnungen, die äußeren Umwelteinflüssen ausgesetzt sind. Herkömmliche Abstreifer finden etwa bei Fahrzeugstoßdämpfern und ähnlichen hydraulischen und/oder pneumatischen Einrichtungen Verwendung, bei denen etwa eine Kolbenstange relativ zu einem Gehäuse verfahren wird. Häufig treten dabei Teile der Kolbenstange in direkten Kontakt mit der Umgebung und sind etwa Verschmutzungen, Vereisungen, Feuchtigkeit und Ähnlichem ausgesetzt. So ist es bekannt, Abstreifer zu verbauen, um dahinterliegende Dichtelemente, Lagerelemente und/oder Führungselemente zumindest vor grobem Schmutz und dergleichen zu schützen.

Abstreifer allgemeiner Art sind etwa aus der WO 2007/101414 A1, der DE 10 2006 002 347 A1 und der US 2006 006 7242 A1 bekannt.

Aus der US 4,566,701 A ist eine Kolbenstangendichtung bekannt, die eine erste ringförmige Abstreifdichtung, eine zweite ringförmige Abstreifdichtung und eine dritte ringförmige Abstreifdichtung aufweist, wobei die erste Abstreifdichtung aus einem elastischen Material besteht und eine innere Lippe aufweist, die an der Kolbenstange anliegt, wobei die zweite Abstreifdichtung aus einem elastischen Material besteht und eine innere Lippe aufweist, die an der Kolbenstange anliegt um zur Vermeidung von Ölverlusten Öl abzustreifen, und wobei die dritte Abstreifdichtung aus einem elastischen Material besteht und eine innere Lippe aufweist, die an der Kolbenstange anliegt um gemeinsam mit der ersten Abstreifdichtung und der der zweiten Abstreifdichtung eine im Wesentlichen leckagefreie Abdichtung der Kolbenstange zu gewährleisten, wobei unter verschiedenen Umgebungs- und Einsatzbedingungen an der Kolbenstange ein Ölfilm aufrechterhalten werden soll.

Weitere Gestaltungen von Abstreifern sind aus der DE 20 2009 013 548 U1, JP 2006 226 455 A sowie der US 2,973,983 A

Es sind jedoch auch Anwendungen bekannt, bei denen herkömmliche Abstreifereinheiten an Leistungsgrenzen stoßen und keine hinreichende Reinigungsfunktion und/oder Schutzfunktion mehr entfalten können. Dies kann etwa bei Baumaschinen der Fall sein. Ein weiterer, äußerst kritischer Anwendungsfall kann bei hydraulischen Anlagen bzw. hydraulischen Arbeitsvorrichtungen gegeben sein, die auf dem Meer (offshore) eingesetzt werden. Derartige Anlagen sind Feuchtigkeit, einem hohen Salzgehalt und/oder extremen Temperaturen ausgesetzt. So kann beispielhaft häufig an Kolbenstangen bei Offshore-Anlagen eine beträchtliche Eisbildung beobachtet werden.

Der Erfindung liegt die Aufgabe zugrunde, bekannte Abstreifereinheiten weiterzubilden, um deren Abstreifwirkung bzw. Reinigungswirkung weiter zu verbessern und um deren Handhabung möglichst zu vereinfachen. Ferner sollen sich die tribologischen Eigenschaften der Abstreifereinheit trotz der Optimierung der Abstreifwirkung nach Möglichkeiten nicht verschlechtern.

Diese Aufgabe wird erfindungsgemäß gelöst durch eine Abstreifereinheit, insbesondere einen Eisabstreifer für hydraulische Arbeitsvorrichtungen, zum Schutz einer Sekundärseite vor an einer Primärseite auftretenden Umwelteinflüssen, insbesondere zum Schutz von Führungsanordnungen und/oder Dichtungsanordnungen, mit einem Haltering, der im Wesentlichen rotationssymmetrisch um eine Längsachse ausgebildet ist und einen Kontaktabschnitt zur Aufnahme an einem Gehäuseteil aufweist, mit einem primären Abstreifer, insbesondere einem äußeren Abstreifer und mit einem sekundären Abstreifer, der gegenüber dem primären Abstreifer axial in Richtung auf die Sekundärseite versetzt ist, wobei am primären Abstreifer eine Primärlippe und am sekundären Abstreifer eine Sekundärlippe ausgebildet ist, wobei die Primärlippe und die Sekundärlippe in einem gefügten Zustand eine Gleitfläche eines geführten Gleitpartnerteils, insbesondere einer Kolbenstange, dichtend kontaktieren, wobei die Primärlippe in Richtung auf die Primärseite kragenartig vorspringt und sich an ihrer dem geführten Gleitpartnerteil im gefügten Zustand abgewandten Seite zumindest abschätzweise in Richtung auf die Primärseite konisch verjüngt, und wobei die Primärlippe eine zur Anlage an der Gleitfläche ausgebildete Kontaktfläche aufweist, wobei der die Primärlippe aufweisende primäre Abstreifer schwimmend gelagert ist, und wobei der primäre Abstreifer radial verschieblich zwischen dem Haltering und dem sekundären Abstreifer aufgenommen ist.

Die Aufgabe der Erfindung wird auf diese Weise vollkommen gelöst.

Erfindungsgemäß kann nämlich die Primärlippe, die die Kolbenstange dichtend kontaktiert, aufgrund der konischen Verjüngung unter Erzeugung eines besonders günstigen Spannungsverlaufs auf die Kolbenstange einwirken, der die Abstreifwirkung wesentlich verbessern kann.

Üblicherweise werden sowohl der primäre Abstreifer als auch der sekundäre Abstreifer unter Vorspannung montiert, um dichtend an dem Gleitpartnerteil, insbesondere der Kolbenstange, anliegen zu können. Zu diesem Zweck weisen die Primärlippe und die Sekundärlippe üblicherweise einen Innendurchmesser auf, der kleiner als ein Außendurchmesser des Gleitpartnerteils ist. Eine derartige Gestaltung wird bei konstanter Wandstärke der Primärlippe einen charakteristischen Spannungsverlauf erzeugen. Der Spannungsverlauf bei der Primärlippe könnte etwa in axialer Richtung im Wesentlichen konstant sein. Da jedoch nunmehr die Primärlippe eine konische Verjüngung aufweist, die in Richtung auf die Primärseite gerichtet ist, weist die Primärlippe an ihrem primärseitigen Ende eine geringere Wandstärke als in sich daran in Richtung auf die Sekundärseite anschließenden Bereichen auf. Trotz gleichem Innendurchmesser kann das primärseitige Ende "einfacher" auf einen Nenndurchmesser des Gleitpartnerteils aufgeweitet werden. Somit liegt in diesem Bereich nur eine relativ geringe Vorspannung an. Ausgehend von diesem geringen Spannungsniveau kann die Vorspannung mit zunehmender Entfernung von dem primärseitigen Ende der Primärlippe ansteigen.

Dies hat den weiteren Vorteil, dass die Primärlippe nunmehr eine größere (axiale) Länge aufweisen kann, ohne eine Bewegung des Gleitpartnerteils durch übermäßige Reibung deutlich zu behindern. Auch dies kann die Abstreifwirkung weiter verbessern.

So kann die Primärlippe an ihrem primärseitigen Ende zunächst besonders nachgiebig gestaltet sein und gleichwohl insgesamt eine hohe Steifigkeit aufweisen. Die konische Verjüngung der Primärlippe kann etwa in einer Spitze oder einen Spitzenbereich münden.

Eine derartige Abstreifereinheit ist in hohem Maße für Anwendungen mit hoher Belastung geeignet, etwa für sogenannte Offshore-Anwendungen, bei denen es zur Eisbildung und zum Kontakt mit salzhaltigem Wasser und feuchter, salzhaltiger Luft kommen kann.

Bei der Primärseite kann es sich insbesondere um eine Außenseite handeln, die Umgebungsbedingungen ausgesetzt sein kann. Bei der Sekundärseite kann es sich insbesondere um die Seite handeln, die von der Abstreifereinheit vor Umgebungseinflüssen geschützt wird. Die Sekundärseite kann daher etwa auch als Innenseite bezeichnet werden.

Gemäß einer weiteren Ausgestaltung ist die Kontaktfläche der Primärlippe zylinderförmig ausgebildet und weist eine axiale Erstreckung a auf, die zumindest 40%, weiter bevorzugt 50%, noch weiter bevorzugt 60% einer axialen Gesamterstreckung b der Abstreifereinzeit beträgt.

Die konische Verjüngung der Primärlippe erlaubt es, die Kontaktfläche der Primärlippe (axial) zu verlängern, ohne dass es zu wesentlich erhöhter Hemmung der Bewegung des Gleitpartnerteils kommt.

Es ist bei einer weiteren Ausgestaltung ferner bevorzugt, wenn die Primärlippe axial über eine primärseitige Abschlussfläche des Halterings hinausragt, wobei der axiale Überstand mindestens 2%, vorzugsweise 5%, weiter bevorzugt mindestens 10% der axialen Gesamterstreckung b der Abstreifereinheit beträgt.

Auch ein derartiger Überstand, der etwa mit der zunehmenden axialen Erstreckung der Kontaktfläche der Primärlippe einhergehen kann, kann durch die konische Verjüngung der Primärlippe ermöglicht sein, da eine solche Gestaltung ohne eine derartige Verjüngung gegebenenfalls zu Kollisionen zwischen der Primärlippe und dem Haltering führen könnte, die die Abstreifwirkung beeinträchtigen können.

Gemäß einer weiteren Ausgestaltung weist die Primärlippe einen zumindest abschnittsweise in Richtung auf die Primärseite vorspringenden Spitzenbereich auf, wobei sich die Sekundärlippe insbesondere an ihrer dem geführten Gleitpartnerteil im gefügten Zustand abgewandten Seite zumindest abschnittsweise in Richtung auf die Primärseite konisch verjüngt.

Somit kann auch die Sekundärlippe in vorteilhafter Weise gestaltet sein. Ferner kann die Sekundärlippe eine sekundäre Kontaktfläche aufweisen, die eine axiale Erstreckung d aufweist, die maximal 50%, weiter bevorzugt maximal 40%, weiter bevorzugt maximal 30% der axialen Erstreckung der Kontaktfläche der Primärlippe aufweist. insgesamt kann der sekundäre Abstreifer eine axiale Länge aufweisen, die maximal 70%, vorzugsweise maximal 60%, weiter bevorzugt maximal 50% der axialen Längserstreckung der Kontaktfläche der Primärlippe aufweist. Somit kann im Vergleich zu herkömmlichen Abstreifereinheiten die axiale Länge der Kontaktfläche der Primärlippe auf Kosten der axialen Länge der Kontaktfläche der Sekundärfläche vergrößert werden. Auf diese Weise kann die Abstreif- und Reinigungswirkung der Primärlippe deutlich verbessert werden, ohne wesentliche Verschlechterungen der Abstreif- und Reinigungswirkung der Sekundärlippe in Kauf nehmen zu müssen.

In zweckmäßiger Ausgestaltung weist der Kontaktabschnitt des Halterings der Abstreifereinheit eine Montagegeometrie auf, insbesondere eine auf die Sekundärseite zulaufende konische Verjüngung. Die konische Verjüngung kann etwa mit der Längsachse des Halterings einen Winkel einschließen, der 30° (Grad), vorzugsweise 20°, weiter bevorzugt 10° umfasst. Die Montagehilfsgeometrie kann eine axiale Erstreckung c aufweisen, die etwa 10%, vorzugsweise 20%, weiter bevorzugt 30% einer axialen Gesamterstreckung b des Halterings bzw. der Abstreifereinheit beträgt.

Auf diese Weise braucht etwa eine Aufnahmegeometrie beim Gehäuseteil, die für den Haltering vorgesehen ist, nicht mit einer besonderen Kantenbearbeitung versehen werden, etwa mit Freistichen oder dergleichen. Gleichwohl kann der Haltering sicher sekundärseitig zur Anlage an das Gehäuseteil gelangen. Es wurde erkannt, dass die Montagehilfsgeometrie beim Haltering vorgesehen werden kann, ohne dass eine damit einhergehende verringerte Anlagefläche des Kontaktabschnitts mit einer korrespondierenden (zylindrischen) Aufnahme des Gehäuseteils nachteilige Auswirkungen auf die Festigkeit oder Funktionalität der Abstreifereinheit hat.

Der die Primärlippe aufweisende primäre Abstreifer ist schwimmend gelagert und radial verschieblich zwischen dem Haltering und dem sekundären Abstreifer aufgenommen. Auf diese Weise kann einerseits eine koaxiale Überbestimmtheit zwischen dem primären Abstreifer, dem sekundären Abstreifer und einem im gefügten Zustand mit diesen gekoppelten Gleitpartnerteil vermieden werden. Ferner kann der primäre Abstreifer, der üblicherweise eine höhere radiale Steifigkeit als der sekundäre Abstreifer aufweist, aufgrund der schwimmenden Anordnung radiale Verformungen und Auslenkungen des Gleitpartnerteils besser kompensieren. In vorteilhafter Weise ist der primäre Abstreifer zumindest im gefügten Zustand durch den Haltering und den sekundären Abstreifer axial gesichert.

Es ist ferner bevorzugt, wenn der Haltering eine primärseitige axiale Haltekontur, insbesondere einen radial nach innen gerichteten Bund, für den primären Abstreifer aufweist, wobei sich daran der im Wesentlichen hohlzylinderförmig ausgebildete Kontaktabschnitt anschließt, der in Richtung auf die Sekundärseite geöffnet ist.

Auf diese Weise kann der Haltering von der Sekundärseite bestückt werden, wobei zunächst der radial verschiebliche primäre Abstreifer und danach der sekundäre Abstreifer eingefügt wird. Es ist bevorzugt, wenn der sekundäre Abstreifer mit hinreichender Vorspannung am Haltering aufgenommen ist. Auf diese Weise in einfacher Weise eine axiale Lagersicherung für den radial verschieblichen ersten (primären) Abstreifer bewirkt werden.

Gemäß einer weiteren Ausgestaltung ist der primäre Abstreifer als Metallabstreifer ausgebildet und insbesondere aus einem Bronzewerkstoff oder aus rostfreiem Stahl gefertigt. Es ist ferner bevorzugt, wenn der sekundäre Abstreifer als elastischer Abstreiferring ausgebildet ist und insbesondere aus einem elastischen Kunststoffwerkstoff, vorzugsweise aus einem Elastomer, hergestellt ist. Der Haltering kann beispielhaft etwa aus einem Kunststoffwerkstoff, vorzugsweise jedoch aus einem Metallwerkstoff bestehen, insbesondere aus rostfreiem Stahl.

Die Aufgabe der Erfindung wird ferner gelöst durch eine hydraulische Arbeitsvorrichtung, insbesondere einen Hydraulikzylinder, die mit einer Abstreifereinheit nach einem der vorgenannten Aspekte versehen ist.

Auch auf diese Weise wird die Aufgabe der Erfindung vollständig gelöst.

Die Abstreifereinheit kann insbesondere Bestandteil einer Anordnung zum Lagern, Dichten und/oder Führen des Gleitpartnerteils sein. Eine solche Anordnung kann etwa als Paket ausgebildet sein, an dessen primärseitigem Ende (außen) die Abstreifereinheit vorgesehen ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine geschnittene seitliche Teilansicht einer hydraulischen Arbeitsvorrichtung, bei der eine Abtreifereinheit vorgesehen ist;
- Fig. 2: eine geschnittene seitliche Teilansicht einer hydraulischen Arbeitsvorrichtung, bei der eine gegenüber der Darstellung in Fig. 1 abgewandelte Abstreifereinheit vorgesehen ist;
- Fig. 3: eine geschnittene Teilansicht einer Abstreifereinheit etwa gemäß Fig. 2;
- Fig. 4: eine geschnittene Teilansicht etwa der Abstreifereinheit gemäß Fig. 4, wobei ein primärer Abstreifer radial verlagert ist; und
- Fig. 5: eine geschnittene Teildarstellung einer Abstreifereinheit mit einer Gestaltung, die gegenüber der Gestaltung gemäß Fig. 3 abgewandelt ist.

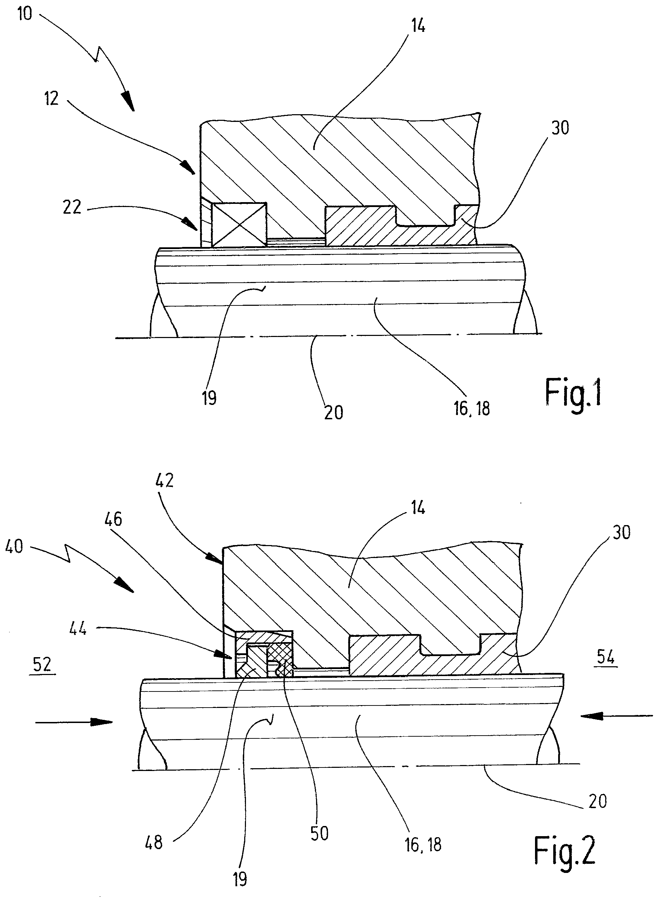

Fig. 1 zeigt eine seitliche, geschnittene Teildarstellung einer hydraulischen Arbeitsvorrichtung 10, die beispielhaft als Hydraulikzylinder ausgestaltet sein kann. Die hydraulische Arbeitsvorrichtung 10 weist ein gehäusefestes Teil oder Gehäuseteil 14 auf, das ein Gleitpartnerteil 16 umgibt. Das Gleitpartnerteil 16 ist vorliegend beispielhaft als Kolbenstange 18 ausgebildet (in Fig. 1 nur teilweise dargestellt). Das Gleitpartnerteil 16 weist eine im Wesentlichen rotationssymmetrische, insbesondere zylindrische Gleitfläche 19 auf. Das Gleitpartnerteil 16 weist ferner eine Längsachse 20 auf, die mit einer korrespondierenden Längsachse durch das Gehäuseteil 14 zusammenfallen kann. Die hydraulische Arbeitsvorrichtung 10 kann dazu ausgebildet sein, eine Relativbewegung, insbesondere eine Gleitbewegung entlang der Längsachse 20 zwischen dem Gehäuseteil 14 und dem Gleitpartnerteil 16 zu erzeugen. Hierbei ist es zunächst einmal unerheblich, welches der beiden Teile 14, 16 eine Absolutbewegung ausführt.

Die hydraulische Arbeitsvorrichtung kann mit einer Führungs- und/oder Dichtungsanordnung 12 versehen sein, die insbesondere das Gehäuseteil 14 und das Gleitpartnerteil 16 zueinander ausrichtet und gegeneinander abdichtet. Die hydraulische Arbeitsvorrichtung 10 kann beispielhaft eine Hochdruckseite (auch: Sekundärseite) und eine Niederdruckseite oder drucklose Seite (auch: Primärseite) aufweisen. Üblicherweise können im Inneren der hydraulischen Arbeitsvorrichtung 10 hohe Drücke herrschen, die etwa durch hydraulische Arbeitsmedien, beispielsweise durch Schleppöl oder dergleichen, übertragen werden, um die Relativbewegung zwischen dem Gehäuseteil 14 und dem Gleitpartnerteil 16 zu erzeugen.

Insbesondere dann, wenn an der Primärseite der hydraulischen Arbeitsvorrichtung 10 hohe Belastungen durch Verschmutzungen, Eis, salzhaltige Luft und Ähnliches drohen, kann die Führungs- und/oder Dichtungsanordnung 12 mit einem Abstreifer 22 versehen sein, der die Führungs- und/oder Dichtungsanordnung 12 nach außen (in Richtung auf die Primärseite) beschließen kann. Der Abstreifer 22 ist als im Wesentlichen ringförmiges Teil ausgebildet, das sich im gefügten Zustand um die Längsachse 20 herum erstreckt. Vorteilhafte Ausgestaltungen des Abstreifers 22 werden nachfolgend in Zusammenhang mit den Fig. 2 bis 5 erläutert. Insgesamt kann der Abstreifer 22 dazu ausgebildet sein, ein Führungselement 30 (in Fig. 1 nur teilweise dargestellt) der Führungs- und/oder Dichtungsanordnung 12 vor übermäßiger Verschmutzung und/oder vor einem übermäßigen Fremdkörpereintrag zu schützen. Abstreifer 22 können grundsätzlich dazu ausgebildet sein, ein innenliegendes Gleitpartnerteil 16 vor Verschmutzungen zu schützen. Es ist jedoch auch vorstellbar, den Abstreifer 22 derart zu gestalten, dass ein außenliegendes Gleitpartnerteil (das relativ zu einem innenliegenden Gehäuseteil verschiebbar ist) vor übermäßiger Verschmutzung geschützt werden kann. Es versteht sich daher, dass, sofern nachfolgend explizit auf Abstreifereinheiten mit innenliegenden Abstreifern eingegangen wird, die beschriebenen Gestaltungen ohne weiteres auch auf Abstreifereinheiten mit außenliegenden und außenwirkenden Abstreifern übertragbar sind.

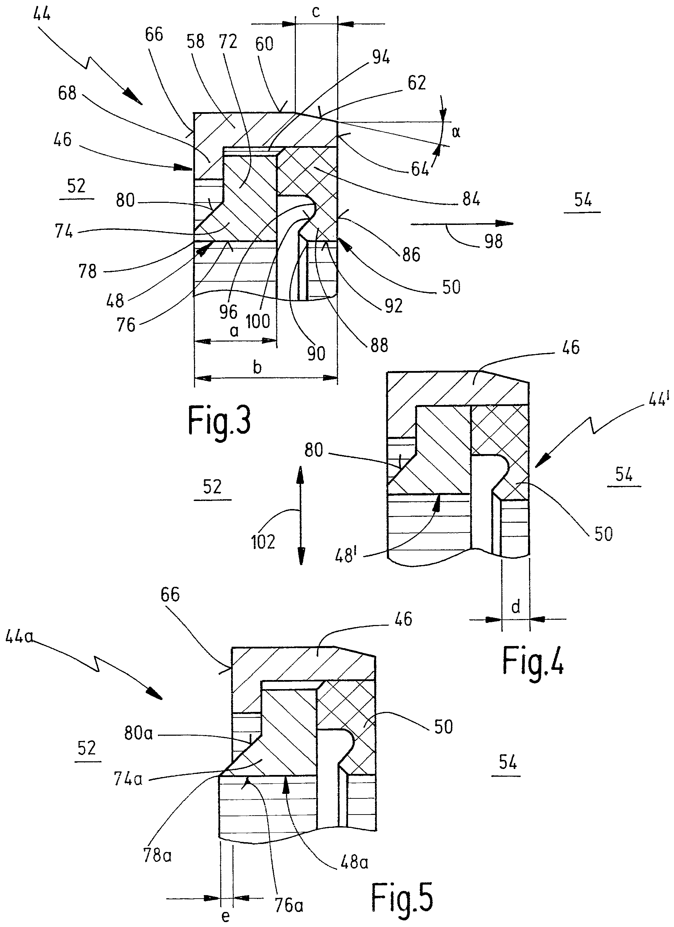

Abstreifereinheiten können für eine Vielzahl von Abmessungen ausgebildet sein. So können die Abstreifereinheiten etwa dazu ausgestaltet sein, Gleitpartnerteile 16, insbesondere Kolbenstangen 18 mit Außendurchmessern im Bereich von etwa 10 mm bis hin zu über 500 mm vor Eis und/oder fest anhaftendem Schmutz zu schützen. Bedingt durch eine Vielzahl möglicher konkreter Anwendungsfälle sind auch davon abweichende Abmessungsbereiche denkbar. Die Abstreifereinheiten können dabei besonders kompakt gestaltet sein und etwa eine Gesamtbreite b (Fig. 3) von maximal 12 mm, vorzugsweise maximal 10 mm, weiter bevorzugt maximal 8 mm aufweisen. Ferner können die Abstreifereinheiten eine geringe radiale Bauhöhe aufweisen, so dass sich bei den Abstreifereinheiten ein Außendurchmesser ergibt, der etwa nur um maximal 35 mm, vorzugsweise um maximal 25 mm, weiter bevorzugt um maximal 15 mm größer als ein Innendurchmesser ist, der an den Außendurchmesser des jeweiligen Gleitpartnerteils 16 angepasst ist. Bedingt durch eine Vielzahl möglicher konkreter Anwendungsfälle sind auch hier abweichende Abmessungsbereiche denkbar.

Anhand der Fig. 2, 3 und 4 wird eine vorteilhafte Gestaltung einer Abstreifereinheit 44 erläutert. Beispielhaft kann die Abstreifereinheit 44 als Eisabstreifer ausgebildet sein.

Fig. 2 zeigt eine seitliche, geschnittene Teildarstellung einer hydraulischen Arbeitsvorrichtung 40, die grundsätzlich der in Fig. 1 gezeigten hydraulischen Arbeitsvorrichtung 10 entsprechen kann. Bei der hydraulischen Arbeitsvorrichtung 40 ist eine Führungs- und/oder Dichtungsanordnung 42 vorgesehen, bei der die Abstreifereinheit 44 verbaut ist. Die Abstreifereinheit 44 schützt eine Sekundärseite 54 vor übermäßigen Verschmutzungen oder Vereisungen, die auf einer Primärseite 52 an dem Gleitpartnerteil 16 anhaften können. Aufgrund der Relativbewegung zwischen dem Gehäuseteil 14 und dem Gleitpartnerteil 16 können die Verschmutzungen bei unzureichender Abstreifwirkung in die Sekundärseite 54 eindringen und dort etwa das Führungselement 30 oder weitere Lagerelemente und/oder Dichtungselemente beeinträchtigen. Dies kann insgesamt zu verminderter Leistungsfähigkeit, zu Undichtigkeiten und/oder gar Ausfällen bei der hydraulischen Arbeitsvorrichtung 40 führen.

Die Abstreifereinheit 44 ist in besonderer Weise an raue Umgebungsbedingungen (Heavy Duty Einsätze) angepasst. Die Abstreifereinheit 44 weist einen Haltering 46 auf, der aus einem metallischen Werkstoff, etwa aus einem rostfreien Edelstahl oder Ähnlichem gefertigt sein kann. Der Haltering 46 ist dazu ausgebildet, in einer am Gehäuseteil 14 ausgebildeten oder mit diesem gekoppelten Aufnahme für die Abstreifereinheit 44 aufgenommen zu werden. Bei der Aufnahme kann es sich etwa um eine Aufnahmenut und/oder eine Aufnahmesenkung handeln. Ferner weist die Abstreifereinheit 44 einen ersten (primären) Abstreifer 48 und einen zweiten (sekundären) Abstreifer 50 auf. Der primäre Abstreifer 48 ist dem sekundären Abstreifer 50 in Richtung auf die Primärseite 52 vorgelagert. Der primäre Abstreifer 48 und der sekundäre Abstreifer 50 sind am Haltering 46 aufgenommen. Der primäre Abstreifer 48 und der sekundäre Abstreifer 50 sind axial voneinander beabstandet. Der primäre Abstreifer 48 kann auch als primärseitiger Abstreifer bezeichnet werden. Der sekundäre Abstreifer 50 kann auch als sekundärseitiger Abstreifer bezeichnet werden. Insgesamt können der Haltering 46, der primäre Abstreifer 48 und der sekundäre Abstreifer 50 ein Abstreiferpaket bilden, das durch Aufnahme der Abstreifereinheit 44 sicher und definiert am Gehäuseteil 14 festgelegt werden kann. Der primäre Abstreifer 48 kann etwa aus einem metallischen Werkstoff gebildet sein, wogegen der der sekundäre Abstreifer 50 insbesondere aus einem Kunststoffwerkstoff bestehen kann. Demgemäß kann der primäre Abstreifer 48 groben Schmutz, etwa grobe Vereisungen von der Kolbenstange 18 lösen. Der sekundäre Abstreifer 50 kann verbliebene Verunreinigungen, die der primäre Abstreifer 48 nicht erfasst hat, von der Kolbenstange 18 lösen.

Fig. 3 und Fig. 4 zeigen Detaildarstellungen der Abstreifereinheit 44. Der Haltering 46 der Abstreifereinheit 44 weist einen im Wesentlichen hohlzylindrischen Kontaktabschnitt 58 auf, an dem eine Kontaktfläche 60 ausgebildet ist, die im gefügten Zustand der Abstreifereinheit mit einer korrespondierenden Aufnahmefläche etwa des Gehäuseteils 14 gefügt ist. An seinem sekundärseitigen Ende weist der Kontaktabschnitt 58 eine konische Verjüngung 62 auf, die sich an die Kontaktfläche 60 anschließen kann. Die konische Verjüngung 62 ist etwa als Einführschräge ausgebildet und kann die Montage der Abstreifereinheit 44 vereinfachen. Die konische Verjüngung 62 kann mit der Längsachse 20 (Fig. 2) einen Winkel α einschließen, der etwa Werte von 10° (Grad), 20° oder 30° aufweisen kann. Die konische Verjüngung 62 kann eine Längserstreckung c aufweisen, die etwa mindestens 10%, vorzugsweise mindestens 20%, weiter bevorzugt mindestens 30% einer axialen Gesamterstreckung oder Breite b der Abstreifereinheit 44 betragen kann. Die Einführschräge oder konische Verjüngung 62 vereinfacht das Fügen oder Montieren der Abstreifereinheit 44 in einer Soll-Fügerichtung, die in Fig. 3 durch einen mit 98 bezeichneten Pfeil gekennzeichnet ist. Die verbliebene Kontaktfläche 60, die als Passfläche für eine Aufnahme am Gehäuseteil 14 fungieren kann, erlaubt weiterhin eine sichere und feste Aufnahme der Abstreifereinheit 44.

Der Haltering 46 weist an seinem sekundärseitigen Ende eine sekundäre Abschlussfläche 64 auf, die etwa auch als Anschlagfläche für eine axiale Anlage am Gehäuseteil 14 fungieren kann. An seinem dem sekundärseitigen Ende abgewandten primärseitigen Ende weist der Haltering 46 eine primärseitige Abschlussfläche 66 auf. In diesem Bereich kann der Haltering 46 ferner einen sich radial nach innen erstreckenden Bund 68 ausbilden. Gemeinsam können der Bund 68 des Halterings 46 und eine axiale Anschlagfläche des Gehäuseteils 14 eine axiale Lage des primären Abstreifers 48 und des sekundären Abstreifers 50 definieren und sichern.

Der primäre Abstreifer 48 weist einen Grundkörper 72 auf, der einen Außenumfang des primären Abstreifers 48 definiert. Insbesondere kann der Grundkörper 72 einen Außendurchmesser aufweisen, der spürbar geringer als ein Innendurchmesser des Kontaktabschnitts 58 des Halterings 46 ist. Mit anderen Worten kann der primäre Abstreifer 48 radial verschieblich am Haltering 46 aufgenommen sein. Auf diese Weise kann der primäre Abstreifer 48 Ausgleichsbewegungen vollziehen. Beispielhaft kann der Grundkörper 72 einen Außendurchmesser aufweisen, der etwa weniger als 99%, vorzugsweise weniger als 97%, weiter bevorzugt weniger als 95% eines Innendurchmessers des Halterings 46 beträgt. Ein sich bei einer Soll-Ausrichtung des primären Abstreifers 48 und des sekundären Abstreifers 50 (etwa koaxial zur Längsachse 20) ergebender Freiraum ist in Fig. 3 mit 94 bezeichnet. Dieser Freiraum kann für Ausgleichsbewegungen des primären Abstreifers 48 genutzt werden, wenn etwa das Gleitpartnerteil 16 schwingt oder anderweitig verformt wird.

An den Grundkörper 72 des primären Abstreifers 48 schließt sich eine Primärlippe 74 an. In Richtung auf die Längsachse 20 bzw. das Gleitpartnerteil 16 weist die Primärlippe 74 eine Kontaktfläche 76 auf, die dazu ausgebildet ist, eine Gleitfläche 19 des Gleitpartnerteils 16 (Fig. 2) zu kontaktieren. Insbesondere kann die Kontaktfläche 76 einen Innendurchmesser aufweisen, der bewusst etwas kleiner als ein Außendurchmesser des Gleitpartnerteils 16 gewählt ist. Auf diese Weise wird sichergestellt, dass der primäre Abstreifer 48 mit Vorspannung auf dem Gleitpartnerteil 16 sitzt. An ihrem primärseitigen Ende weist die Primärlippe einen Spitzenbereich 78 auf, der etwa als umlaufende Kante ausgebildet sein kann. Die Primärlippe 74 ist dazu ausgebildet, grobe Verschmutzungen, Vereisungen und Ähnliches, die etwa mit dem sich bewegenden Gleitpartnerteil 16 von der Primärseite 52 auf die Abstreifereinheit 44 zubewegt werden, zu lösen und/oder abzustreifen.

Die Primärlippe 74 zeichnet sich ferner durch eine zumindest abschnittsweise ausgebildete Verjüngung oder konische Verjüngung 80 aus, die der Primärseite 52 zugewandt ist. Mit anderen Worten kann die Primärlippe 74 in Richtung auf die Primärseite 52 angeschrägt sein. Es kann sich somit für die Primärlippe 74 im Querschnitt ein Wandstärkenverlauf ergeben, der primärseitig nur geringe Wandstärken aufweist, in Richtung der Sekundärseite 54 jedoch mit zunehmenden Wandstärken einhergeht. Auf diese Weise kann sich bei der im gefügten Zustand dicht am Gleitpartnerteil 16 anliegenden Primärlippe 74 ein günstiger Spannungsverlauf ergeben. Dies kann die Abstreifwirkung bzw. die Abscheidewirkung verbessern.

Die in Fig. 3 veranschaulichte Primärlippe 74 zeichnet sich ferner durch eine große wirksame Breite a auf. Es ist insbesondere bevorzugt, wenn die Breite a der Primärlippe 74, die der Breite der Kontaktfläche 76 entsprechen kann, mindestens etwa 40%, vorzugsweise mindestens etwa 50%, weiter bevorzugt mindestens etwa 60% der Gesamtbreite b der Abstreifereinheit 44 beträgt. Die Gesamtbreite b kann insbesondere der Breite (auch: axiale Längserstreckung) des Halterings 46 entsprechen.

Der sekundäre Abstreifer 50 der Abstreifereinheit 44 ist axial gegenüber dem primären Abstreifer 48 in Richtung auf die Sekundärseite 54 versetzt. Der sekundäre Abstreifer 50 weist einen Grundkörper 84 auf, der einen Außendurchmesser des sekundären Abstreifers 50 definiert. Insbesondere kann der Grundkörper 84 einen Außendurchmesser aufweisen, der an den Innendurchmesser des Halterings 48 angepasst ist, um eine hinreichend feste und sichere radiale Aufnahme des zweiten Abstreifers 50 am Haltering 46 zu gewährleisten. Mit anderen Worten weist der sekundäre Abstreifer 50 im Gegensatz zum primären Abstreifer 48 kein Radialspiel bezüglich des Halterings 46 auf. An seinem sekundärseitigen Ende bildet der sekundäre Abstreifer 50 eine sekundäre Abschlussfläche 86 aus, die im Wesentlichen deckungsgleich zur sekundären Abschlussfläche 64 des Halterings 46 sein kann. Somit kann sich im gefügten Zustand der Abstreifereinheit 44 für den ersten Abstreifer 48 ein definierter axialer Bauraum ergeben, der einerseits eine Lagesicherung bezwecken und andererseits genügend Freiraum für radiale Ausgleichsbewegungen des primären Abstreifers 48 bereitstellen kann.

An den Grundkörper 84 des sekundären Abstreifers 50 schließt sich eine Sekundärlippe 88 an, die in einen Spitzenbereich 90 mündet. Der Spitzenbereich 90 kann insbesondere eine umlaufende Kante aufweisen. An ihrem im gefügten Zustand dem Gleitpartnerteil 16 bzw. der Längsachse 20 zugewandten Ende weist die Sekundärlippe 88 ferner eine Kontaktfläche 92 auf. Fig. 4 veranschaulicht eine Breite d der Kontaktfläche 92. Am primärseitigen Übergang zwischen dem Grundkörper 84 und der Sekundärlippe 88 ist eine etwa ringförmig umlaufende Aussparung 96 in den sekundären Abstreifer 50 eingebracht. Auf diese Weise kann sich eine gewünschte Elastizität und Deformierbarkeit insbesondere der Sekundärlippe 88 ergeben. Die Aussparung 96 kann in eine schräg in Richtung auf die Primärseite 52 verlaufende konische Fläche oder Verjüngung 100 übergehen.

Der Haltering 46 kann aus einem Metallwerkstoff, insbesondere aus einem korrosionsbeständigen Metallwerkstoff, beispielsweise einem rostfreien Stahl, hergestellt werden. Vorzugsweise ist auch der primäre Abstreifer 48 aus einem Metallwerkstoff oder metallhaltigem Werkstoff gefertigt. Hierbei kann es sich insbesondere um einen Bronzewerkstoff handeln. Denkbar wäre etwa auch Messing, Stahl, insbesondere rostfreier Stahl, oder Ähnliches. Der sekundäre Abstreifer 50 kann aus einem Kunststoff, insbesondere aus einem hinreichend elastischen Kunststoff, gefertigt sein. Denkbar ist es, den sekundären Abstreifer 50 etwa aus Polyurethan (PUR) zu fertigen. Es ist allgemein vorstellbar, den sekundären Abstreifer 50 aus elastomeren Werkstoffen, etwa aus thermoplastischen Elastomeren oder Ähnlichem herzustellen.

Eine Zusammenschau der Fig. 3 und 4 veranschaulicht die radiale Verschieblichkeit des primären Abstreifers 48. Mit anderen Worten kann der primäre Abstreifer 48 schwimmend zwischen dem Haltering 46 und dem zweiten Abstreifer 50 aufgenommen sein, um etwa auf Verformungen des Gleitpartnerteils 16 (Fig. 2) reagieren zu können. Der in Fig. 4 mit 48' bezeichnete primäre Abstreifer hat eine radiale Ausgleichsbewegung vollzogen, deren Richtung in Fig. 4 durch einen mit 102 bezeichneten Pfeil angedeutet ist. Die Ausgleichsbewegung 102 erfolgt im Wesentlichen senkrecht zur Längsachse 20 (Fig. 2). Auch wenn der sekundäre Abstreifer 50 nicht schwimmend oder radial verschieblich am Haltering 46 aufgenommen ist, weist dieser jedoch eine hinreichend hohe Elastizität auf, so dass auch der sekundäre Abstreifer 50 auf Verlagerungen des Gleitpartnerteils 16 reagieren kann. Dies erfolgt jedoch hauptsächlich durch elastische Verformungen des sekundären Abstreifers 50.

Fig. 5 veranschaulicht eine alternative Gestaltung einer Abstreifereinheit 44a, die im Wesentlichen mit der anhand der Fig. 3 und 4 veranschaulichten Abstreifereinheit 44 korrespondiert.

Bei der Abstreifereinheit 44a ist ein primärerer Abstreifer 48a vorgesehen, der eine Primärlippe 74a aufweist, die einen deutlich ausgeprägten Spitzenbereich 78a aufweist. Insbesondere ist der Spitzenbereich 78a gegenüber dem Spitzenbereich 78 (Fig. 3) axial in Richtung auf die Primärseite 52 verlängert. Dies kann so weit gehen, dass der Spitzenbereich 78a im Wesentlichen nur durch eine einzige umlaufende Kante gebildet wird, in der die Verjüngung 80a und die Kontaktfläche 76a des primären Abstreifers 48a zusammenlaufen bzw. einander schneiden. Auf diese Weise kann die Breite oder wirksame (axiale) Länge a des primären Abstreifers 48a weiter erhöht werden. Insbesondere ist es bevorzugt, wenn der Spitzenbereich 78a in Richtung auf die Primärseite 52 über die primärseitige Abschlussfläche 66 des Halterings 46 hinausragt. Es kann sich dabei etwa ein Überstand e ergeben, der mindestens 2%, vorzugsweise 5%, weiter bevorzugt mindestens 10% der Breite b oder axialen Gesamterstreckung der Abstreifereinheit 44 bzw. des Halterings 46 beträgt.

## Patentansprüche

1. Abstreifereinheit (44), insbesondere Eisabstreifer für hydraulische Arbeitsvorrichtungen, zum Schutz einer Sekundärseite (54) vor an einer Primärseite (52) auftretenden Umwelteinflüssen, insbesondere zum Schutz von Führungsanordnungen und/oder Dichtungsanordnungen (42), mit einem Haltering (46), der im Wesentlichen rotationssymmetrisch um eine Längsachse (20) ausgebildet ist und einen Kontaktabschnitt (58) zur Aufnahme an einem Gehäuseteil (14) aufweist, mit einem primären Abstreifer (48), insbesondere einem äußeren Abstreifer, und mit einem sekundären Abstreifer (50), der gegenüber dem primären Abstreifer (48) axial in Richtung auf die Sekundärseite (54) versetzt ist, wobei am primären Abstreifer (48) eine Primärlippe (74) und am sekundären Abstreifer (50) eine Sekundärlippe (88) ausgebildet ist, wobei die Primärlippe (74) und die Sekundärlippe (88) in einem gefügten Zustand eine Gleitfläche (19) eines geführten Gleitpartnerteils (16), insbesondere einer Kolbenstange, dichtend kontaktieren, wobei die Primärlippe (74) in Richtung auf die Primärseite (52) kragenartig vorspringt und sich an ihrer dem geführten Gleitpartnerteil (16) im gefügten Zustand abgewandten Seite zumindest abschnittweise in Richtung auf die Primärseite (52) konisch verjüngt, und wobei die Primärlippe (74) eine zur Anlage an der Gleitfläche (19) ausgebildete Kontaktfläche (76) aufweist, **dadurch gekennzeichnet, dass** der die Primärlippe (74) aufweisende primäre Abstreifer (48) schwimmend gelagert ist, und dass der primäre Abstreifer (48) radial verschieblich zwischen dem Haltering (46) und dem sekundären Abstreifer (50) aufgenommen ist.

2. Abstreifereinheit (44) nach Anspruch 1, **dadurch gekennzeichnet, dass** die Kontaktfläche (76) der Primärlippe (74) zylinderförmig ausgebildet ist und eine axiale Erstreckung (a) aufweist, die zumindest 40%, weiter bevorzugt 50%, noch weiter bevorzugt 60% einer axialen Gesamterstreckung (b) der Abstreifereinheit (44) beträgt.

3. Abstreifereinheit (44) nach Anspruch 1 oder 2, **dadurch gekennzeichnet, dass** die Primärlippe (74) axial über eine primärseitige Abschlussfläche (66) des Halterings (46) hinausragt, und wobei der axiale Überstand mindestens 2%, vorzugsweise 5%, weiter bevorzugt mindestens 10% der axialen Gesamterstreckung (b) der Abstreifereinheit (44) beträgt.

4. Abstreifereinheit (44) nach einem der vorhergehenden Ansprüche, **dadurch gekennzeichnet, dass** die Sekundärlippe (88) einen zumindest abschnittsweise in Richtung auf die Primärseite (52) vorspringenden Spitzenbereich (90) aufweist und wobei sich die Sekundärlippe (88) insbesondere an ihrer dem geführten Gleitpartnerteil (16) im gefügten Zustand abgewandten Seite zumindest abschnittsweise in Richtung auf die Primärseite (52) konisch verjüngt.

5. Abstreifereinheit (44) nach einem der vorhergehenden Ansprüche, **dadurch gekennzeichnet, dass** der Kontaktabschnitt (58) des Halterings (46) eine Montagehilfsgeometrie (62) aufweist, insbesondere eine auf die Sekundärseite (54) zulaufende konische Verjüngung.

6. Abstreifereinheit (44) nach einem der vorhergehenden Ansprüche, **dadurch gekennzeichnet, dass** der Haltering (46) eine primärseitige axiale Haltekontur (68), insbesondere einen radial nach innen gerichteten Bund, für den primären Abstreifer (48) aufweist, und wobei sich daran der im wesentlichen hohlzylinderförmig ausgebildete Kontaktabschnitt (58) anschließt, der in Richtung auf die Sekundärseite (54) geöffnet ist.

7. Abstreifereinheit (44) nach einem der vorhergehenden Ansprüche, **dadurch gekennzeichnet, dass** der primäre Abstreifer (48) als Metallabstreifer ausgebildet ist und insbesondere aus einem Bronzewerkstoff oder aus rostfreiem Stahl gefertigt ist.

8. Abstreifereinheit (44) nach einem der vorhergehenden Ansprüche, **dadurch gekennzeichnet, dass** der sekundäre Abstreifer (50) als elastischer Abstreifring ausgebildet ist und insbesondere aus einem elastischen Kunststoffwerkstoff, vorzugsweise aus einem Elastomer, hergestellt ist.

9. Hydraulische Arbeitsvorrichtung, insbesondere Hydraulikzylinder, **gekennzeichnet durch** eine Abstreifereinheit (44) nach einem der vorhergehenden Ansprüche.

## Claims

1. Wiper unit (44), particularly ice wiper for hydraulic working apparatuses, for protecting a secondary side (54) against environmental influences occurring at a primary side (52), particularly for protecting guide arrangements and/or sealing arrangements (42), comprising a retaining ring (46) which is arranged in a fashion basically rotationally symmetric about a longitudinal axis (20), and which comprises a contact portion (58) for being supported at a housing part (14), a primary wiper (48), particularly an outer wiper, and a secondary wiper (50) which is axially spaced away relative to the primary wiper (48) towards the secondary side (54), wherein a primary lip (74) is formed at the primary wiper (48) and a secondary lip (88) is formed at the secondary wiper (50), wherein the primary lip (74) and the secondary lip (88) contact, in a mounted state, a sliding surface (19) of a guided slide partner part (16), particularly a piston rod, in a sealing fashion, wherein the primary lip (74) protrudes towards the primary side (52) in a collar-like fashion, wherein the primary lip (74), at the side thereof facing away from the guided slide partner part (16) in the mounted state, is at least sectionally conically tapered towards the primary side (52), and wherein the primary lip (74) comprises a contact surface (76) arranged to abut the sliding surface (19), **characterized in that** the primary wiper (48) comprising the primary lip (74) is mounted in a floating fashion, and **in that** the primary wiper (48) is arranged in a radially movable fashion between the retaining ring (46) and the secondary wiper (50).

2. Wiper unit (44) according to claim 1, **characterized in that** the contact surface (76) of the primary lip (74) is arranged in a cylindrical fashion and comprises an axial extension (a) of at least 40%, preferably 50%, further preferred 60% of an axial overall extension (b) of the wiper unit (44).

3. Wiper unit (44) according to claim 1 or 2, **characterized in that** the primary lip (74) axially extends beyond a primary-side end surface (66) of the retaining ring (46), and wherein the axial projection is at least 2%, preferably 5%, further preferred at least 10% of the axial overall extension (b) of the wiper unit (44).

4. Wiper unit (44) according to any of the preceding claims, **characterized in that** the secondary lip (88) comprises a tip area (90) at least sectionally protruding towards the primary side (52), and wherein the secondary lip (88), particularly at the side thereof facing away from the guided slide partner part (16) in the mounted state, is at least sectionally conically tapered towards the primary side (52).

5. Wiper unit (44) according to any of the preceding claims, **characterized in that** the contact portion (58) of the retaining ring (46) comprises an auxiliary mounting feature (62), particularly a conical tapering pointing to the secondary side (54).

6. Wiper unit (44) according to any of the preceding claims, **characterized in that** the retaining ring (46) comprises a primary-side axial retaining contour (68) for the primary wiper (48), particularly a radially inwardly facing flange, and wherein the contact portion (58), which is arranged in a basically hollow cylindrical fashion, adjoins the retaining contour (68), and wherein the contact portion (58) is opened towards the secondary side (54).

7. Wiper unit (44) according to any of the preceding claims, **characterized in that** the primary wiper (48) is arranged as a metal wiper and particularly manufactured from a bronze material or from stainless steel.

8. Wiper unit (44) according to any of the preceding claims, **characterized in that** the secondary wiper (50) is arranged as an elastic wiper ring and particularly manufactured from an elastic plastic material, preferably from an elastomer.

9. Hydraulic working apparatus, particularly hydraulic cylinder, **characterized by** a wiper unit (44) according to any of the preceding claims.

## Revendications

1. Unité de raclage (44), en particulier racle de glace pour des dispositifs de travail hydrauliques, pour protéger un côté secondaire (54) des influences environnementales survenant sur un côté primaire (52), en particulier pour la protection d'agencements de guidage et/ou d'agencements de garniture (42), avec un anneau de retenue (46) qui est réalisé de manière sensiblement symétrique en rotation autour d'un axe longitudinal (20) et présente une section de contact (58) pour la réception sur une partie de boîtier (14), avec une racle primaire (48), en particulier une racle extérieure, et avec une racle secondaire (50) qui est décalée par rapport à la racle primaire (48) axialement en direction du côté secondaire (54), dans laquelle sur la racle primaire (48), une lèvre primaire (74) et sur la racle secondaire (50), une lèvre secondaire (88) sont réalisées, dans laquelle la lèvre primaire (74) et la lèvre secondaire (88) touchent de manière étanche dans un état assemblé une surface glissante (19) d'une partie partenaire glissante guidée (16), en particulier d'une tige de piston, dans laquelle la lèvre primaire (74) dépasse comme une collerette en direction du côté primaire (52) et se rétrécit coniquement, sur son côté éloigné de la partie partenaire glissante guidée (16) dans l'état assemblé, au moins par section en direction du côté primaire (52), et dans laquelle la lèvre primaire (74) présente une surface de contact (76) réalisée pour l'appui contre la surface glissante (19), **caractérisée en ce que** la racle primaire (48) présentant la lèvre primaire (74) est logée de manière flottante, et **en ce que** la racle primaire (48) est reçue de manière radialement mobile entre l'anneau de retenue (46) et la racle secondaire (50).

2. Unité de raclage (44) selon la revendication 1, **caractérisée en ce que** la surface de contact (76) de la lèvre primaire (74) est réalisée en forme de cylindre et présente une étendue axiale (a) qui s'élève au moins à 40 %, de manière davantage préférée à 50 %, de manière encore préférée à 60 % d'une étendue entière axiale (b) de l'unité de raclage (44).

3. Unité de raclage (44) selon la revendication 1 ou 2, **caractérisée en ce que** la lèvre primaire (74) dépasse axialement d'une surface de terminaison (66) côté primaire de l'anneau de retenue (46), et dans laquelle le porte-à-faux axial s'élève à moins à 2 %, de préférence à 5 %, de manière encore préférée au moins à 10 % de l'étendue entière axiale (b) de l'unité de raclage (44).

4. Unité de raclage (44) selon l'une des revendications précédentes, **caractérisée en ce que** la lèvre secondaire (88) présente une zone de pointe (90) en saillie au moins par section en direction du côté primaire (52) et dans laquelle la lèvre secondaire (88) se rétrécit coniquement, en particulier sur son côté éloigné de la partie partenaire glissante guidée (16) dans l'état assemblé, au moins par section en direction du côté primaire (52).

5. Unité de raclage (44) selon l'une des revendications précédentes, **caractérisée en ce que** la section de contact (58) de l'anneau de retenue (46) présente une géométrie auxiliaire de montage (62), en particulier un rétrécissement conique s'étendant vers le côté secondaire (54).

6. Unité de raclage (44) selon l'une des revendications précédentes, **caractérisée en ce que** l'anneau de retenue (46) présente un contour de retenue (68) axial côté primaire, en particulier un collet dirigé radialement vers l'intérieur, pour la racle primaire (48), et dans laquelle la section de contact (58) réalisée sensiblement en forme de cylindre creux se raccorde à celle-ci, laquelle est ouverte en direction du côté secondaire (54).

7. Unité de raclage (44) selon l'une des revendications précédentes, **caractérisée en ce que** la racle primaire (48) est réalisée comme une racle métallique et est fabriquée en particulier en un matériau de bronze ou en acier inoxydable.

8. Unité de raclage (44) selon l'une des revendications précédentes, **caractérisée en ce que** la racle secondaire (50) est réalisée comme un anneau de raclage élastique et est fabriquée en particulier en un matériau plastique élastique, de préférence en un élastomère.

9. Dispositif de travail hydraulique, en particulier vérin hydraulique, **caractérisé par** une unité de raclage (44) selon l'une des revendications précédentes.
